# EUROPÄISCHE PATENTSCHRIFT

(11) **EP 1 034 986 B1**
(45) Veröffentlichungstag und Bekanntmachung des Hinweises auf die Patenterteilung: **07.05.2003**
(21) Anmeldenummer: 00104211.8
(22) Anmeldetag: 01.03.2000
(51) Int. Cl.: B60R 21/01

(54) **Verfahren zur Steuerung eines Insassenschutzsystems**
Method for controlling a passenger restraint system
Méthode de commande d' un système de retenue pour passager

(30) Priorität: 05.03.1999 DE 19909403
(43) Veröffentlichungstag der Anmeldung: 13.09.2000
(73) Patentinhaber: Conti Temic microelectronic GmbH, 90411 Nürnberg (DE)
(72) Erfinder: Schilling, Gerhard, 86561 Aresing (DE); Schifflechner, Achim, 85055 Ingolstadt (DE); Wagner, Gerhard, 86529 Schrobenhausen (DE); Weber, Martin, 85614 Kirchseeon (DE)

(56) Entgegenhaltungen:
- EP-A- 0 689 967
- DE-A- 19 541 122
- DE-C- 19 648 267
- US-A- 5 413 378

## Beschreibung

Die Erfindung betrifft ein Verfahren zur Steuerung eines Insassenschutzsystems gemäß dem Oberbegriff des Anspruchs 1.

Verfahren zur Steuerung eines Insassenschutzsystems mittels einer Zentraleinheit in Abhängigkeit von Beschleunigungssignalen unter Berücksichtigung der Sitzbelegung sind beispielsweise der DE 195 47 333 A1, DE 196 15 321 A1, DE 196 11 073 A1 oder der DE 197 24 344 C1 zu entnehmen, die den Oberbegriff des Anspruchs 1 zeigen. Dabei wird die Auslösung wenigstens einer Insassenschutzeinrichtung, insbesondere des Beifahrer-Airbags, unabhängig vom Beschleunigungssignal gesperrt, wenn die Zentraleinheit ein Auslösesperrsignal von einer Sitzbelegungserkennungseinrichtung empfängt. Als derartige Sitzbelegungserkennungseinrichtungen werden neben Kontaktschaltern im Fahrzeugsitz auch Druck- oder Kapazitätssensoren sowie Lichtschranken, Echoreflexverfahren oder Bilderkennungssysteme eingesetzt.

Darüber hinaus sind bereits manuell betätigbare Auslösesperren bekannt, mit denen der Fahrer oder Beifahrer die Auslösbarkeit der Insassenschutzeinrichtungen freigeben oder sperren kann. Die EP 0 728 636 A1 beschreibt beispielsweise die Möglichkeit, trotz einer ein Sperrsignal sendenden Sitzbelegungserkennungseinrichtung die Insassenschutzeinrichtung dennoch manuell zuschalten zu können.

Die Steuerung der Auslösung erfolgt dabei üblicherweise über eine Zentraleinheit mit einem Mikroprozessor, der durch Software programmiert die Beschleunigungssignale und Auslösesperrsignale erfaßt und verarbeitet. Leider kann bei Mikroprozessoren nicht völlig ausgeschlossen werden, daß diese aufgrund eines Fehlers in der Software oder durch Störsignale kurzzeitige Fehlfunktionen aufweisen. Aus diesem Grund schlägt die DE 197 43 914 A1 ein Verfahren zur Steuerung eines Insassenschutzsystems vor, bei dem redundant zum Mikroprozessor in einer dem Mikroprozessor vorgeschalteten Auswerteeinheit aus den Beschleunigungssignalen ein Freigabesignal für die Zündeinheiten abgeleitet wird, wenn die Beschleunigungssignale eine vorgegebene Schwelle überschreiten. Die Zündeinheiten werden nur dann ausgelöst, wenn neben dem Zündbefehl auch das Freigabesignal vorliegt. Ein Verarbeitungsfehler der Beschleunigungssignale in der Zentraleinheit kann somit nicht direkt zur Auslösung führen, sofern nicht zumindest die Schwelle für das Freigabesignal überschritten wurde. Die vorgeschaltete Auswerteeinheit kann ihrerseits schaltungstechnisch deutlich aufgebaut werden als eine Zentraleinheit mit einem Mikroprozessor, so daß diese Auswerteeinheit nicht störanfällig ist, insbesondere keine Softwarefehler und Interrupts aufweist.

Die DE 196 11 073 A1 zeigt darüber hinaus noch die Möglichkeit, daß die mit einem Mikroprozessor ausgestattete Auswerteeinheit nur die Beschleunigungssignale erfaßt und ein entsprechendes Auslösesignal erzeugt, währenddessen eine separate Auswerteeinheit für die Sitzbelegungserkennung vorgesehen ist, mittels der ein Freigabe- bzw. Sperrsignal erzeugt wird, welches in einer Torschaltung logisch mit dem Auslösesignal verknüpft wird, so daß nur bei Vorliegen eines Freigabesignals in Verbindung mit dem Auslösesignal eine Zündung des Airbags über den Zündstromkreis erfolgen kann.

Die DE 39 24 595 A1 lehrt eine Steueranordnung für ein Insassenschutzsystem, bei der eine Überwachungsschaltung die Frequenz eines von einem Mikroprozessor erzeugten Prüfsignals überwacht und bei einer Abweichung die Auslösung von Insassenschutzeinrichtungen verhindert wird, indem eine Sperrvorrichtung zwischen Zentraleinheit und Insassenschutzeinrichtung aktiviert wird.

Die DE 44 24 020 A1 beschreibt ebenfalls eine Überwachung einer Steuereinheit einer Sicherheitseinrichtung durch eine weitere Steuereinheit.

Aufgabe der Erfindung ist es, ein Verfahren zur Steuerung eines Insassenschutzsystems mittels einer Zentraleinheit in Abhängigkeit von Beschleunigungssignalen sowie dem Vorliegen wenigstens eines Auslösesperrsignals von einer manuell betätigbaren Auslösesperre oder einer Sitzbelegungserkennungseinrichtung anzugeben, welches eine Absicherung gegen Fehler in der Zentraleinheit aufweist.

Diese Aufgabe wird bei einem eingangs genannten Verfahren gemäß der kennzeichnenden Merkmale des Anspruchs 1 durch eine Überwachung der Auslösesperre und der Sitzbelegungserkennungseinrichtungen in einer Auswerteeinheit parallel zur Zentraleinheit gelöst. Die Auswerteeinheit setzt ein Zündsperrsignal, sobald zumindest eine dieser Einrichtungen ein Auslösesperrsignal setzt. Durch das Zündsperrsignal wird auf eine zwischen Zentraleinheit und Zündstromkreis befindliche Sperrvorrichtung einwirkt, die eine Sperrung der Auslösung bewirkt. Eine unerwünschte Auslösung der Insassenschutzeinrichtung aufgrund eines Fehlers in der Zentraleinheit ist somit nicht möglich.

Die Auswerteeinheit kann dabei äußerst einfach durch Logikgatter eine Plausibilitätsprüfung der einzelnen Auslösesperrsignale durchführen, ohne daß dafür eine aufwendige und störanfällige Software erforderlich ist. Als Sperrvorrichtung kann ein den Zündstromkreis unterbrechender Schalter oder eine die Weiterleitung des Zündsignals an die Endstufe verhindernde Torschaltung eingesetzt werden.

Die Erfindung soll nachfolgend anhand von Ausführungsbeispielen und Figuren näher erläutert werden. Kurze Beschreibung der Figuren:
- Figur 1: Insassenschutzsystem mit einer Auswerteeinheit parallel zur Zentraleinheit zur Überwachung der Auslösesperre und der Sitzbelegungserkennungseinrichtungen und zur Erzeugung eines Zündsperrsignals
- Figur 2: Beispiel einer Auswerteeinheit der Auslösesperre und der Sitzbelegungserkennungseinrichtungen als kaskadiertes Logikgatter

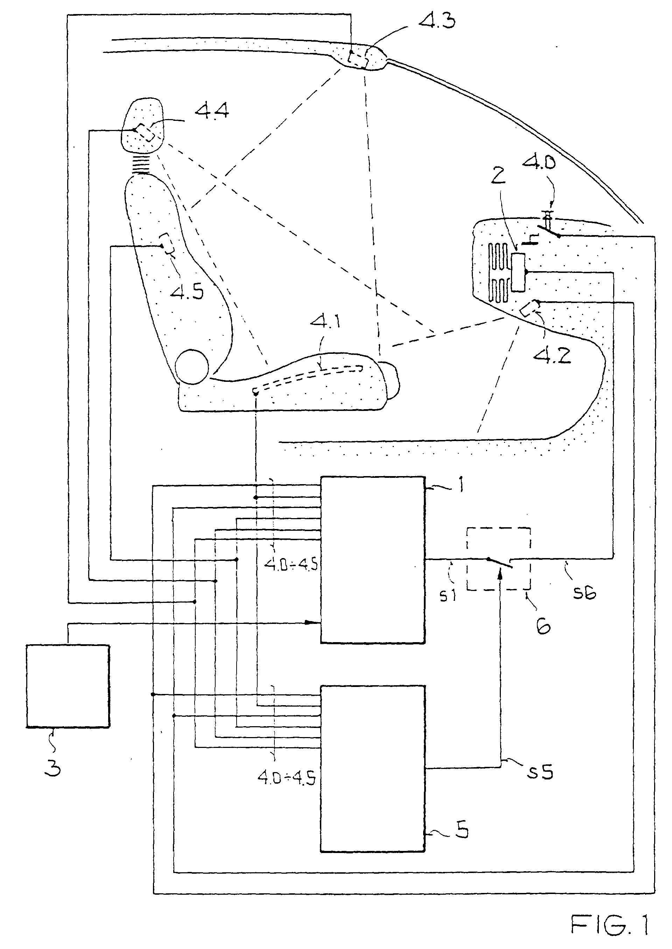

Die Figur 1 zeigt den Beifahrersitz eines Kraftfahrzeuges mit einer diesem Sitz zugeordneten Insassenschutzeinrichtung 2 ausgeführt als Front-Airbag, wobei selbstverständlich auch weitere, nicht dargestellte Insassenschutzeinrichtungen, wie Sidebags oder Gurtstraffer in der nachfolgend beschriebenen Weise in Abhängigkeit von Beschleunigungssignalen und Auslösesperrsignalen gesteuert werden können.

So ist mit der Insassenschutzeinrichtung 2 eine Zentraleinheit 1 verbunden, die von Beschleunigungssensoren 3 ein oder mehrere Beschleunigungssignal(e) erhält, auf Grundlage derer die Zentraleinheit 1 einen Unfall aufgrund der charakteristischen starken Beschleunigungsverläufe erkennt und ein Auslösesignal s1 setzt. Diese Auslösung der Insassenschutzeinrichtung wird jedoch von der Zentraleinheit 1 unabhängig vom Beschleunigungssignal gesperrt, wenn die Zentraleinheit 1 von einer manuell betätigbaren Auslösesperre 4.0 oder/und von wenigstens einer der Sitzbelegungserkennungseinrichtungen 4.1 bis 4.5 ein Auslösesperrsignal empfängt. Zusätzlich werden die Auslösesperre 4.0 und die Sitzbelegungserkennungseinrichtungen 4.1 bis 4.5 von einer separaten Auswerteeinheit 5 aus überwacht.

Die manuell betätigbare Auslösesperre 4.0 ist als Schaltmittel ausgeführt, dessen Schaltzustand von der Zentraleinheit 1 und der Auswerteeinheit 5 erfaßt wird. Den Fahrzeuginsassen ist es damit möglich, selbst über die Auslösbarkeit der Insassenschutzeinrichtung 2 zu entscheiden. Selbstverständlich kann auch auf eine solche manuell betätigbare Auslösesperre 4.0 verzichtet werden. Dann würden nur die Sitzbelegungserkennungseinrichtungen 4.1 bis 4.5 von der Zentraleinheit 1 und der Auswerteeinheit 5 erfaßt.

Die Sitzbelegungserkennungseinrichtungen 4.1 bis 4.5 sind in Figur 1 einzig beispielhaft aufgeführt, denn es gibt eine große Anzahl von möglichen Konzepten zur Sitzbelegungserkennung mit unterschiedlichen Sensoren, von denen jeweils eines oder einzelne ausgewählt werden. In Figur 1 wird eine drucksensitive Sitzmatte 4.1, eine auf den Fußraum gerichtete optische Überwachungseinheit 4.2, eine vom Fahrzeugdach auf den Innenraum gerichtete Einheit 4.3 sowie weitere Einheiten 4.4 und 4.5 auf optischem oder schallreflektierendem Prinzip angeführt, um die Vielzahl möglicher Sitzbelegungserkennungseinrichtungen ohne Anspruch auf Vollständigkeit zu verdeutlichen.

Diese Sitzbelegungserkennungseinrichtungen 4.1 bis 4.5 überwachen den der Insassenschutzeinrichtung 2 zugeordneten Sitz und setzen ein logisch auswertbares Auslösesperrsignal, falls eine bei Auslösung des Airbags 2 gefährliche Sitzposition oder Sitzbelegung, insbesondere ein rückwärtsgerichteter Kindersitz, erkannt wird.

Während in der Zentraleinheit 1 die Signale von den Beschleunigungssensoren 3 und den Sitzbelegungserkennungseinrichtungen 4.1 bis 4.5 sowie der Auslösesperre 4.0 durch die Software ausgewertet werden, werden die Signale der Sitzbelegungserkennungseinrichtungen 4.1 bis 4.5 und der Auslösesperre 4.0 parallel auch in der Auswerteeinheit 5 überwacht, die ohne Verzögerung ein Zündsperrsignal s5 setzt, sobald zumindest eine dieser Einrichtungen ein Auslösesperrsignal setzt. Das Zündsperrsignal s5 steuert eine zwischen Zentraleinheit 1 und Insassenschutzeinrichtung 2 befindliche Sperrvorrichtung 6, die eine Sperrung der Auslösung bewirkt. Ein Auslösesignal s1 der Zentraleinheit 1 kann somit nur dann zur Auslösung der Insassenschutzeinrichtung 2 führen, wenn kein Zündsperrsignal s5 gesetzt und die Sperrvorrichtung 6 geschlossen ist. Eine Fehlauslösung durch einen Fehler in der Zentraleinheit 1 ist somit nicht mehr möglich.

Als Sperrvorrichtung wird in Figur 1 ein den Zündstromkreis unterbrechender Schalter verwendet, wobei ohne weiteres auch eine die Weiterleitung des Auslösesignals s1 an eine Zündendstufe verhindernde Torschaltung denkbar ist.

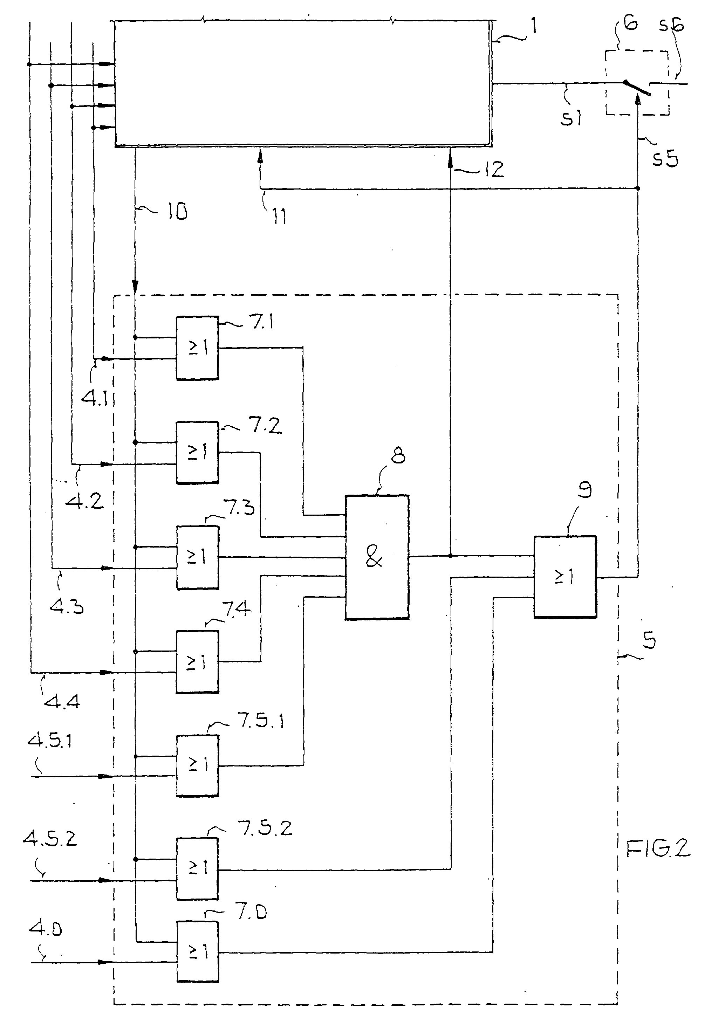

Figur 2 zeigt nun noch eine Plausibilitätsprüfung bei einer Auswerteeinheit der Auslösesperre und der Sitzbelegungserkennungseinrichtungen als kaskadiertes Logikgatter. In diesem Beispiel weist eine Sitzbelegungserkennungseinrichtung, die von der Beifahrerlehne 4.5, zwei unterschiedliche Signale auf, von denen 4.5.1. als erste Stufe für eine nicht völlig sichere Sitzbelegung steht, die bei schwer zuordenbaren Signalcharakteristiken gesetzt wird und 4.5.2. für eine zweite Stufe steht, in der der Sitz sicher als belegt bzw. nicht belegt erkennbar ist. Negatoren können zur Anpassung an die Logik jederzeit ergänzt werden.

Während Stufen einer sicheren Erkennung oder die Betätigung der manuellen Auslösesperre 4.0 sofort zur Freigabe oder Sperrung führen, indem sie über einen gemeinsamen Oder-Gatter 9 jeweils das Zündsperrsignal s5 setzen können, werden unsichere Signale, wie das Signal 4.5.1 und die der anderen Sitzbelegungserkennungseinrichtungen 4.1 bis 4.4 in einem UND-Gatter 8 zusammengefaßt. selbstverständlich lassen sich nach diesem Prinzip auch noch mehrere Ebenen logischer Verknüpfungen der einzelnen Signale zu einer weitergehenden Plausibilitätsprüfung einfügen.

Zusätzlich wird bei deaktivem Auslösesignal s1 eine Überprüfung und Überwachung der Auswerteeinheit 5 mittels des Prüfsignals 10 möglich, welches parallel zu den Signalen der Auslösesperre 4.0 und der Sitzbelegungserkennungseinrichtungen 4.1 bis 4.5 den jeweils zwischengeschalteten Oder-Gattern 7.0-7.5.2 zugeführt wird, und somit diese sowie das UND-Gatter 8 und das Oder-Gatter 9 getestet werden können, indem deren Ausgänge über die Leitungen 11 und 12 zurück zur Zentraleinheit 1 geleitet werden. Defekte in den Logikgattern können so jederzeit erkannt werden.

## Patentansprüche

1. Verfahren zur Steuerung eines Insassenschutzsystems mittels einer Zentraleinheit (1) in Abhängigkeit von Beschleunigungssignalen,
a) mit wenigstens einer Insassenschutzeinrichtung (2), deren Auslösung die Zentraleinheit (1) unabhängig vom Beschleunigungssignal sperrt, wenn die Zentraleinheit (1) wenigstens ein Auslösesperrsignal empfängt, und zwar
b) von einer manuell betätigbaren Auslösesperre (4.0) oder/und
c) von wenigstens einer Sitzbelegungserkennungseinrichtung (4.1 4.5), welche auf einem der Insassenschutzeinrichtung (2) zugeordneten Sitz eine bei deren Auslösung gefährliche Sitzposition oder Sitzbelegung, insbesondere einen rückwärtsgerichteten Kindersitz, erkennt, **dadurch gekennzeichnet, daß**
d) die Auslösesperre (4.0) und die Sitzbelegungserkennungseinrichtungen (4.1-4.5) von einer Auswerteeinheit (5) parallel zur Zentraleinheit (1) überwacht werden, die ein Zündsperrsignal (s5) setzt, sobald zumindest eine dieser Einrichtungen ein Auslösesperrsignal setzt, und
e) das Zündsperrsignal (s5) auf eine zwischen Zentraleinheit (1) und Insassenschutzeinrichtung (2) befindliche Sperrvorrichtung (6) einwirkt, die eine Sperrung der Auslösung bewirkt.

2. Verfahren nach Anspruch 1, **dadurch gekennzeichnet, daß** die Auswerteeinheit (5) eine Plausibilitätsprüfung der Auslösesperrsignale der verschiedenen Sitzbelegungserkennungseinrichtungen (4.1-4.5) untereinander durchführt, indem die Auswerteeinheit (5) aus kaskadiert geschalteten Logikgattern (8,9) gebildet wird.

3. Verfahren nach Anspruch 1 oder 2, **dadurch gekennzeichnet, daß** als Sperrvorrichtung (6) ein den Zündstromkreis unterbrechender Schalter oder eine die Weiterleitung des Zündsignals an eine Zündendstufe verhindernde Torschaltung verwendet wird.

## Claims

1. A method of controlling an occupant protection system by means of a central unit (1) in dependence on acceleration signals,
a) including at least one occupant protection device (2) which is blocked from triggering by the central unit (1) independently of the acceleration signal if the central unit (1) receives at least one triggering-blocking signal
b) from a manually actuatable triggering-blocking means (4.0) or/and
c) from at least one seat occupancy detecting device (4.0 - 4.5), which, for a seat associated with the occupant protection device, detects a seat position or an occupancy of a seat, especially a rearwardly directed child seat, that would be dangerous in the event of the occupant protection device being triggered, **characterised in that**
d) the triggering-blocking means (4.0) and the seat occupancy detecting devices (4.1 - 4.5) are monitored by an evaluating unit (5) which is in parallel with the central unit (1) and produces an ignition blocking signal (s5) as soon as at least one of these devices produces a triggering-blocking signal, and
e) the ignition blocking signal (s5) is effective on a blocking device (6) which is located between the central unit (1) and the occupant protection device (2) and causes the triggering action to be blocked.

2. A method in accordance with Claim 1, **characterised in that** the evaluating unit (5) carries out a plausibility check amongst the triggering-blocking signals from the various seat occupancy detecting devices (4.1 - 4.5) **in that** the evaluating unit (5) is formed from cascaded logic gates (8, 9).

3. A method in accordance with Claim 1 or 2, **characterised in that** a switch which interrupts the ignition circuit or a gate circuit which prevents the ignition signal from being passed to an ignition output stage is used as the blocking device (6).

## Revendications

1. Procédé pour commander un système de protection de passager au moyen d'une unité centrale (1) en fonction de signaux d'accélération,
a) comportant au moins un dispositif de protection de passager (2), dont le déclenchement est bloqué par l'unité centrale (1) indépendamment du signal d'accélération lorsque l'unité centrale (1) reçoit au moins un signal de blocage de déclenchement, et ce de la part
b) d'un dispositif de blocage de déclenchement (4.0) actionné manuellement et/ou
c) d'au moins un dispositif d'identification d'occupation de siège (4.0-4.5), qui identifie sur un siège associé au dispositif de protection de passager une position ou une occupation du siège dangereuse lors de son déclenchement, notamment un siège pour enfant tourné vers l'arrière,
**caractérisé en ce que**
d) le dispositif blocage de déclenchement (4.0) et les dispositifs d'identification d'occupation de siège (4.1-4.5) sont contrôlés par une unité d'évaluation (5) parallèlement à l'unité centrale (1), qui positionne un signal de blocage d'amorçage (s5) dès qu'au moins l'un de ces dispositifs positionne un signal de blocage de déclenchement, et
e) le signal de blocage d'amorçage (s5) agit sur un dispositif de blocage (6), qui est situé entre l'unité centrale (1) et le dispositif de protection de passager (2) et réalise un blocage du déclenchement.

2. Procédé selon la revendication 1, **caractérisé en ce que** l'unité d'évaluation (5) exécute un contrôle de vraisemblance des signaux de blocage de déclenchement des différents dispositifs (4.1-4.5) d'identification d'occupation de siège (16), par le fait que l'unité d'évaluation (5) est formée par des portes logiques (8, 9) branchées en cascade.

3. Procédé selon la revendication 1 ou 2, **caractérisé en ce qu'**on utilise comme dispositif de blocage (6) un interrupteur qui interrompt le circuit d'amorçage ou un circuit de porte qui empêche la transmission du signal d'amorçage à un étage final d'amorçage.
